# EUROPEAN PATENT APPLICATION

(11) **EP 4 243 527 A1**
(43) Date of publication of application: **13.09.2023**
(21) Application number: 20960237.4
(22) Date of filing: 03.11.2020
(51) Int. Cl.: H04W 72/04

(54) **COMMUNICATION METHOD AND COMMUNICATION DEVICE UNDER MULTI-CONNECTION**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2020/126292
(87) International publication number: WO 2022/094774

(57) **Abstract**

The present disclosure provides a communication method and communication device under multi-connection. The communication method comprises: determining a message frame, wherein the message frame comprises a multi-connection information element for indicating multi-connection configuration information; and sending the message frame. The technical solution provided in exemplary embodiments of the present disclosure can improve the throughput.

## Description

### TECHNICAL FIELD

The disclosure relates to the field of communication, in particular to, a method and an apparatus for communication on multiple links.

### BACKGROUND

In May 2018, Institute of Electrical and Electronic Engineers (IEEE) established Task Group (TG) IEEE802.11be to study a next generation (IEEE802.11a/b/g/n/ac) wireless fidelity (Wi-Fi) technology. The scope of the study is bandwidth transmission of 320MHz, aggregation and coordination of multiple frequency bands, etc. It is expected that the speed and throughput can be increased by at least four times compared with an existing IEEE802.11ax standard. Its main application scenarios are video transmission, augmented reality (AR), virtual reality (VR), etc.

The aggregation and coordination of multiple frequency bands mean that devices communicate with each other in frequency bands of 2.4GHz, 5.8GHz, and 6 to 7GHz at the same time. For the simultaneous communication among devices in multiple frequency bands, a new media access control (MAC) mechanism needs to be defined to manage it. In addition, the low-latency transmission is expected to be supported in the IEEE802.11be standard.

In the IEEE802.11be standard, a maximum bandwidth to be supported is 320MHz (160MHz+160MHz), in addition to 240MHz (160MHz+80MHz) and the bandwidth supported in the IEEE802.11ax standard.

In the IEEE802.11be standard, a station (STA) and an access point (AP) can be a multi-link device (MLD), i.e., a device supports a capability to simultaneously transmit and/or receive on multiple links at the same moment. Therefore, in the IEEE802.11be standard, there can be multiple links between the STA and the AP. In the IEEE802.11be standard, the communication between these two devices on multiple links will be studied. However, in the existing standard, address interaction on multiple links is not possible if the multi-link communication is not supported.

### SUMMARY

Aspects of the disclosure will at least solve the above problems and/or deficiencies. Various embodiments of the disclosure provide the following technical solutions.

According to some embodiments of the disclosure, a method for communication on multiple links is provided. The method is applicable to an access point (AP). The method includes: determining a first message frame, in which the first message frame includes a first multi-link (ML) element for indicating ML configuration information of the AP, and the first ML element includes a media access control (MAC) address ID corresponding to each link of multiple links of the AP; and sending the first message frame.

According to some embodiments of the disclosure, a method for communication on multiple links is provided. The method is applicable to a station (STA). The method includes: determining a second message frame, in which the second message frame includes a second ML element for indicating ML configuration information of the STA, and the second ML element includes a multi-link device (MLD) MAC address ID for indicating a MAC address of the STA and/or a MAC address ID corresponding to each link of multiple links of the STA; and sending the second message frame.

According to some embodiments of the disclosure, a method for communication on multiple links is provided. The method includes: sending a message frame, in which the message frame includes a ML element for indicating ML configuration information.

According to some embodiments of the disclosure, an apparatus for communication on multiple links is provided. The apparatus is applicable to an AP. The apparatus includes a processing module and a communication module. The processing module is configured to determine a first message frame, in which the first message frame includes a first ML element for indicating ML configuration information of the AP, and the first ML element includes a MAC address ID corresponding to each link of multiple links of the AP and/or a MLD MAC address ID for indicating a MAC address of the AP. The communication module is configured to send the first message frame.

According to some embodiments of the disclosure, an apparatus for communication on multiple links is provided. The apparatus is applicable to a STA. The apparatus includes a processing module and a communication module. The processing module is configured to determine a second message frame, in which the second message frame includes a second ML element for indicating ML configuration information of the STA, and the second ML element includes a MLD MAC address ID for indicating a MAC address of the STA and/or a MAC address ID corresponding to each link of multiple links of the STA. The communication module is configured to send the second message frame.

According to some embodiments of the disclosure, an electronic device is provided. The electronic device includes a memory, a processor and computer programs stored on the memory and runnable on the processor. When the computer programs are executed by the processor, the method as described above is performed.

According to some embodiments of the disclosure, a computer readable storage medium having computer programs stored thereon is provided. When the computer programs are executed by a processor, the method as described above is performed.

The technical solutions provided in the embodiments of the disclosure can enable the MLD to communicate on multiple links, to improve the throughput.

### BRIEF DESCRIPTION OF THE DRAWINGS

The above and additional features of the embodiments of the disclosure will become more apparent by describing the embodiments of the disclosure in detail with reference to the accompanying drawings, in which:
FIG. 1 is an exemplary schematic diagram of a communication scenario on multiple links.
FIG. 2 is a flowchart of a communication method according to some embodiments.
FIG. 3 is a schematic diagram of details of an optional subelement according to some embodiments.
FIG. 4 is a flowchart of another communication method according to some embodiments.
FIG. 5 is a schematic diagram of interactive communication between an AP and a STA according to some embodiments.
FIG. 6 is a block diagram of a communication apparatus according to some embodiments.
FIG. 7 is a block diagram of another communication apparatus according to some embodiments.

### DETAILED DESCRIPTION

The following descriptions with reference to the accompanying drawings are provided to fully understand the various embodiments of the disclosure as defined by the appended claims and their equivalents. The various embodiments of the disclosure include various specific details, but such specific details are considered to be exemplary only. In addition, descriptions of well-known techniques, functions and constructions may be omitted for the sake of clarity and brevity.

Terms and words used in the disclosure are not limited to written meanings, but are used by inventors to enable a clear and consistent understanding of the disclosure. Therefore, for those skilled in the art, the descriptions of various embodiments of the disclosure are provided only for the purpose of illustration, but not for the purpose of limitation.

It should be understood that "a", "an", "said", and "the" in singular forms used herein can also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It will be understood that although the terms "first" and "second" and the like can be used herein to describe various elements, these elements should not be limited by these terms. These terms are only used to distinguish one element from another. Therefore, a first element discussed below may be referred to as a second element without departing from the teaching of the embodiments.

It should be understood that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of..." used herein includes any and all combinations of one or more related listed items.

Unless otherwise defined, all terms used herein, including technical terms and scientific terms, have the same meaning as generally understood by those skilled in the art to which this disclosure belongs.

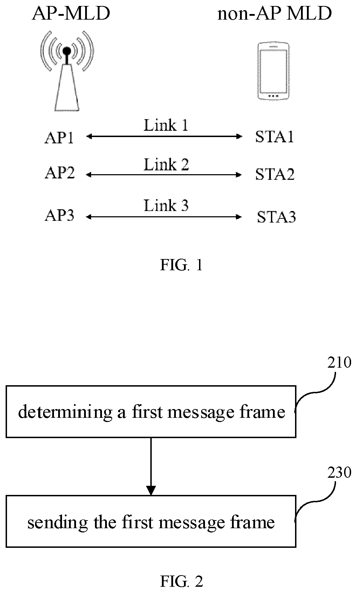

FIG. 1 is an exemplary schematic diagram of a communication scenario on multiple links.

In a wireless local area network, a basic service set (BSS) can include an AP and one or more STAs that communicate with the AP. A BSS can be connected to a distribution system (DS) through its AP, and then connected to another BSS, to form an extended service set (ESS).

The AP is a wireless switch used for the wireless network and is a core of the wireless network. The AP device can be used as a wireless base station and mainly used as a bridge to connect the wireless network and a wired network. With this AP, the wired and wireless networks can be integrated.

The AP may include software applications and/or circuitries to enable other types of nodes in the wireless network to communicate with outside and inside of the wireless network via the AP. For example, the AP can be a terminal device or a network device equipped with a wireless fidelity (Wi-Fi) chip.

For example, the STAs may include, but are not limited to: cellular phones, smart phones, wearable devices, computers, personal digital assistants (PDAs), personal communication system (PCS) devices, personal information managers (PIMs), personal navigation devices (PNDs), global positioning systems, multimedia devices, Internet of Things (IoT) devices, and the like.

In some embodiments of the disclosure, the AP and the STA may support a MLD, which may, for example, be denoted as AP MLD and non-AP MLD, respectively. For ease of description, in the following context, example communication between an AP and a STA on multiple links is primarily described, which is not limited in some embodiments.

In FIG. 1, by way of illustration only, an AP MLD may be an AP supporting a ML communication function, and a non-AP MLD may be an STA supporting a ML communication function. As illustrated in FIG. 1, the AP MLD may operate on three links, such as AP1, AP2, and AP3 illustrated in FIG. 1, and the non-AP MLD may also operate on three links, such as STA1, STA2, and STA3 illustrated in FIG. 1. In FIG. 1, for example, AP1 communicates with STA1 via Link1, similarly, AP2 communicates with STA2 via Link2, and AP3 communicate with STA3 via Link3, respectively. In addition, Link1 to Link3 may be multiple links at different frequencies, e.g., links at 2.4 GHz, 5 GHz, and 6 GHz, etc., or several links at 2.4GHz with the same or different bandwidths. Moreover, there may be multiple channels on each link. However, it should be understood that the communication scenario in FIG. 1 is only exemplary and the inventive concept is not limited thereto. For example, the AP MLD may be connected to multiple non-AP MI,Ds, or the AP may communicate with other types of STAs on each link.

To support the ML communication, the embodiments of the disclosure provide a method for communication on multiple links. In detail, the communication method according to the embodiments of the disclosure may include: sending a message frame, in which the message frame may include an ML element for indicating ML configuration information. That is, the communication method according to the embodiments of the disclosure can be applicable to any MLD, and the ML element can include information relating to configuration of multiple links supported by the MLD. By way of exemplary and non-limiting description only, when the communication method according to the embodiments of the disclosure is applicable to an AP MLD, the message frame sent may be a beacon frame, an association response frame, or an ML establishment request response frame. When the communication method according to the embodiments of the disclosure is applicable to a non-AP MLD, the message frame sent may be a probe request frame, an association request frame, a re-association request frame, or an ML establishment request message frame.

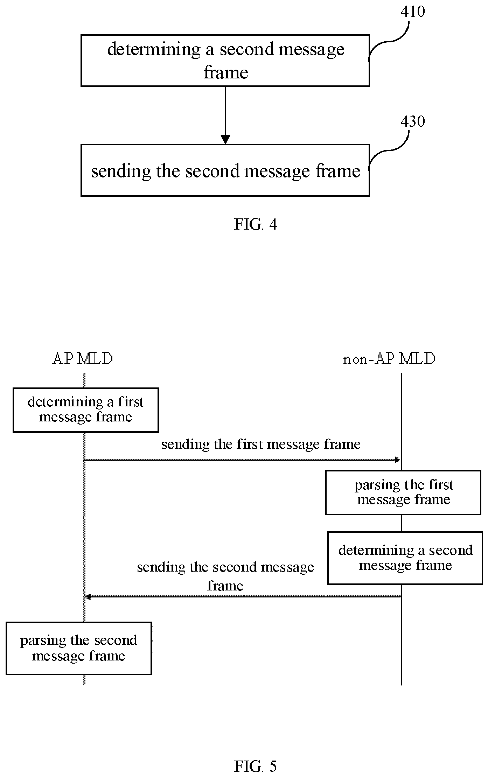

In the following content, the communication method applicable to the AP MLD and the communication method applicable to the non-AP MLD according to the embodiments of the disclosure are described with reference to FIG. 2 and FIG. 4, respectively.

FIG. 2 is a flowchart of a communication method according to some embodiments. The communication method in FIG. 2 can be applicable to the AP.

As illustrated in FIG. 2, at step 210, a first message frame is determined. According to the embodiments, the first message frame may include a first ML element for indicating ML configuration information of the AP. For example, the first message frame may be determined by the AP on one link of multiple links supported by itself. According to some embodiments of the disclosure, the first message frame may be a beacon frame or an association response frame broadcasted by the AP, which is not limited by some embodiments of the disclosure. Depending on the communication environment, the first message frame may be any other type of frame, such as an ML establishment request response frame. In some embodiments, the first message frame may be determined based on the software/hardware configuration, the communication capabilities and the current communication environment, of the AP. In other embodiments, the pre-stored or pre-written first message frame may be obtained directly.

At step 220, the first message frame is sent. For example, the first message frame may be sent on any link of the multiple links. According to some embodiments, the link used to determine the first message frame at step 210 and the link used to send the first message frame at step 220 may be the same or different.

For example, the format of the first ML element can be as illustrated in Table 1 below.

**Table 1. ML Element**

| | Element ID | Length | Element ID Extension | Multi-Link Control | MLD MAC Address | TBD | Optional Subelements |
|---|---|---|---|---|---|---|---|
| (Octets) | 1 | 1 | 1 | 2 | 0 or 6 | TBD | variable |

As illustrated in Table 1, Element ID, Length and Element ID Extension are similar to those defined in existing standards and are not specifically described in the disclosure.

In Table 1, the first ML element may include an MLD MAC address ID for indicating a MAC address of the AP (i.e., MLD MAC Address in Table 1). According to the embodiments, one MLD (e.g., AP MLD) may have a unique MLD MAC address ID for identifying the MLD (e.g., AP MLD). According to the embodiments, when the communication quality is poor and one link of the multiple links may not be identified, the AP MLD to which the link belongs can be identified by the MLD MAC Address, so that communication can continue using other link(s) of the identified AP MLD.

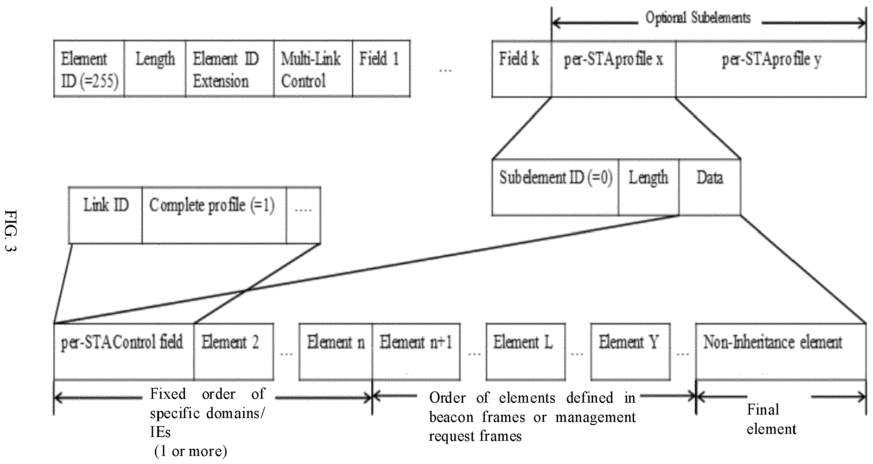

In Table 1, the details of the Optional Subelements can be illustrated in FIG. 3. For address interaction on multiple links in the interaction between the AP MLD and the non-AP MLD, the per-STA profile x sub-field in FIG. 3 may include a MAC address ID corresponding to each link on the multiple links (e.g., AP1 to AP3 illustrated in FIG. 1) supported by the AP MLD, as illustrated in Table 2 below. For example, the content illustrated in Table 2 can be included in the data of the per-STA profile. In FIG. 3, STA in "per-STA profile" can generally refer to the AP MLD and the non-AP MLD in a broad sense. However, when the example of ML Element illustrated in FIG. 3 is applicable to the first message frame of the AP MLD, STA in "per-STA profile" may correspond to the AP MLD. Moreover, in the communication method described below with reference to FIG. 4, when the example of ML Element illustrated in FIG. 3 is applicable to a second message frame of the non-AP MLD, STA in "per-STA profile" may correspond to the non-AP MLD.

**Table 2. MAC address ID for multiple links**

| | | | | | | |
|---|---|---|---|---|---|---|
| Link ID 1 | MAC 1 | Link ID2 | MAC 2 | ... | Link IDn | MAC n |

As illustrated in Table 2, the first ML element may include a MAC address ID corresponding to each link of multiple links of the AP MLD (MAC 1 to MAC n) and a link ID corresponding to each link of multiple links of the AP MLD (Link ID1 to Link IDn). The MAC address ID corresponding to each link of multiple links of the AP MLD (MAC 1 to MAC n) can be used to identify the MAC address on each link (e.g., the MAC address of each of AP1 to AP3 in FIG. 1). That is, although the AP MLD can have the unique MLD MAC address ID (MLD MAC Address in Table 1), each link of the AP MLD can have a different MAC address ID (MAC 1 to MAC n in Table 2). According to the embodiments, by setting the MAC address ID of each link, the security of communication can be ensured, for example, in secure encrypted communication, the corresponding secret key can be generated based on the MAC address of each link; and the quality of communication can be ensured, for another example, when one link has communication failure, the communication can be continued based on the MAC addresses of other link(s).

In addition, in other embodiments, the link IDs (Link ID1 to Link IDn) may be omitted. For example, the MAC address ID corresponding to each link may be identified in Table 2 according to the order of frequencies of links, and thus the link IDs (Link ID1 to Link IDn) may be omitted, which is only exemplary and is not limited in the embodiments of the disclosure.

In Table 1, the MLD MAC address ID ("MLD MAC Address" in Table 1) and the MAC address ID of each link ("MAC 1 to MAC n" in Table 2) can be included in different sub-fields of the first ML element. The first ML element may include the MLD MAC Address and MAC 1 to MAC n as illustrated in Table 1, which is not limited in the embodiments of the disclosure. For example, the MLD MAC Address may also be omitted in some cases (e.g., in the case of better communication quality).

In addition, the first ML element may also include a link number ID for indicating a number of multiple links of the AP. For example, the link number ID can be included in the Multi-Link Control in Table 1, i.e., "number of supported links" as illustrated in B0-B2 in Table 3 below.

**Table 3. Multi-Link Control**

| | | | |
|---|---|---|---|
| | B0-B2 | B3 | TBD |
| | number of supported links | MLD MAC Address Present | TBD |
| bits | 3 | 1 | TBD |

According to the embodiments, the first message frame may further include a capability information ID for indicating that the AP is capable of supporting ML communication. For example, the AP MLD may carry this capability information ID in the beacon frame for broadcasting, to notify the STA that receives the beacon frame of the capability information of the AP MLD. In an example, the capability information ID may be represented in the form of a Capability Info Element of the first message frame.

FIG. 4 is a flowchart of another communication method according to some embodiments. The communication method illustrated in FIG. 4 can be applicable to a STA (e.g., the non-AP MLD of FIG. 1).

As illustrated in FIG. 4, at step 410, a second message frame is determined. According to some embodiments, the second message frame may include a second ML element for indicating ML configuration information of the STA. According to some embodiments, the second ML element may include an MLD MAC address ID for indicating a MAC address of the STA and/or a MAC address ID corresponding to each link of multiple links of the STA. For example, the second message frame may be determined by the STA on one link of multiple links supported by the STA. According to some embodiments of the disclosure, the second message frame may be a probe request frame, an association request frame or a re-association request frame, sent by the STA, which is not limited in some embodiments of the disclosure. Depending on the communication environment, the second message frame may be any other type of frame, such as an ML establishment request message frame. In some embodiments, the second message frame can be determined based on the software/hardware configuration, the communication capabilities and the current communication environment, of the STA. In other embodiments, the pre-stored or pre-written second message frame may be obtained directly.

According to some embodiments, the second ML element includes a link ID corresponding to each link of multiple links of the STA.

According to some embodiments, the second ML element includes a link number ID for indicating a number of multiple links of the STA.

The second ML element and the MLD MAC address ID, the MAC address ID corresponding to each link, the link ID corresponding to each link and the link number ID, included therein, may be similar to the format described with reference to Tables 1 and 2 and FIG. 3, and the repetitive description of which is omitted herein for brevity. Similar to Table 1, the MLD MAC address ID of the non-AP MLD and the MAC address ID corresponding to each link may be included in different sub-fields in the second ML element, respectively.

In an example, in response to the STA being in an enhanced single radio ML (ESRML) mode, the second ML element may be set to include the MLD MAC address ID. That is, in the ESRML mode, the address of each link in the non-AP MLD may be the MLD MAC address ID, which is only exemplary and is not limited in the embodiments of the disclosure. For example, the address of each link may also be different in this mode.

In addition, according to the embodiments, the second message frame may also include a capability information ID for indicating that the STA is capable of supporting ML communication. For example, the non-AP MLD may carry this capability information ID in a probe request frame, an association request frame, a re-association request frame or an ML establishment request message frame for broadcasting, to notify the AP that receives the corresponding frame of the capability information of the non-AP MLD. In an example, this capability information ID can be represented in the form of Capability Info Element in the second message frame.

At step 420, the second message frame is sent. For example, the second message frame may be sent on any of the multiple links. According to the embodiments, the link used to determine the second message frame at step 410 and the link used to send the second message frame at step 420 may be the same or different.

The communication methods illustrated in FIG. 2 and FIG. 4 are exemplary only, which are not limited in the disclosure. For example, the communication method of FIG. 2 may further include receiving the second message frame by the AP from the STA, so that the MLD MAC address ID of the STA and/or the MAC address ID of each link of the STA are obtained by parsing the second message frame. The communication method illustrated in FIG. 4 may further include receiving the first message frame by the STA from the AP, so that the MLD MAC address ID of the AP and/or the MAC address ID of each link of the STA are obtained by parsing the first message frame. FIG. 5 is a schematic diagram of interactive communication between an AP and a STA according to some embodiments. The first message frame may be a beacon frame, an association response frame or an ML establishment request response frame, etc., and the second message frame may be a probe request frame, an association request frame, a re-association request frame or an ML establishment request message frame, etc. The first message frame and the second message frame may carry the ML element as described above for interaction of MAC addresses (i.e., MLD MAC address ID and/or MAC address ID corresponding to each link). The interactive communication process illustrated in FIG. 5 is only exemplary and is not limited in the embodiments of the disclosure. For example, the order of interaction of the first message frame and the second message frame may be suitably changed depending on the communication state.

When the AP and STA complete the initial access (ML establishment), but no Receiver Address (RA)/ Transmitter Address (TA) interaction is performed on each link, additional signaling is required for interaction. Therefore, the interactive communication illustrated in FIG. 5 can be performed during ML establishment, the AP of the MLD and the STA of the MLD exchange the MLD MAC address ID and/or the corresponding MAC address ID of each link between each other via the first message frame and the second message frame as defined above. In this way, the interaction of RA/TA on the multiple links can be performed at the time of ML establishment, thereby saving signaling interaction.

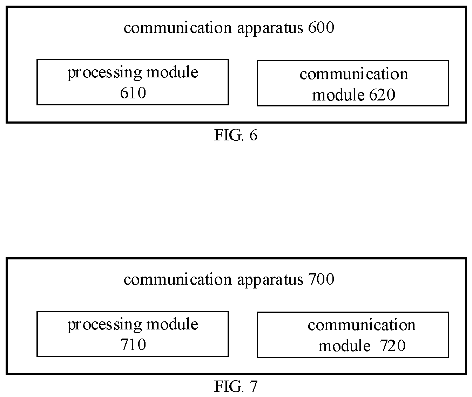

FIG. 6 is a block diagram of a communication apparatus according to some embodiments. The communication apparatus 600 illustrated in FIG. 6 can be applicable to an AP.

As illustrated in FIG. 6, the communication apparatus 600 may include a processing module 610 and a communication module 620.

The processing module 610 is configured to determine a first message frame. According to embodiments, the first message frame includes a first ML element for indicating ML configuration information of the AP. The first ML element includes a MAC address ID corresponding to each link of multiple links of the AP and/or a MLD MAC address ID for indicating a MAC address of the AP. The first message frame may be similar to the description of FIG. 2 and the repetitive description is omitted herein for brevity. The communication module 620 may be configured to send the determined first message frame, for example, to the STA.

The communication module 620 may be configured to receive a second message frame from the STA. According to the embodiments, the second message frame may include a second ML element for indicating ML configuration information of the STA, in which the second ML element may include an MLD MAC address ID for indicating a MAC address of the STA and/or a MAC address ID corresponding to each link of multiple links of the STA. When the communication module 620 receives the second message frame from the STA, the processing module 610 may obtain the MLD MAC address ID of the STA and/or the MAC address ID corresponding to each link of multiple links of the STA by parsing the second message frame.

The communication apparatus 600 may support the communication method described with reference to FIG. 2 and the repetitive description is omitted herein for brevity. The communication apparatus 600 illustrated in FIG. 6 is only exemplary and is not limited in the embodiments of the disclosure. For example, the communication apparatus 600 may also include other modules, e.g., memory modules, etc. In addition, the individual module in the communication apparatus 600 may be combined into more complex modules or may be divided into more separate modules.

FIG. 7 is a block diagram of another communication apparatus according to some embodiments. The communication apparatus 700 illustrated in FIG. 7 may be applicable to a STA.

As illustrated in FIG. 7, the communication apparatus 700 may include a processing module 710 and a communication module 720.

The processing module 710 may be configured to determine the second message frame. According to the embodiments, the second message frame may include a second ML element for indicating ML configuration information of the STA. The second ML element may include an MLD MAC address ID for indicating a MAC address of the STA and/or a MAC address ID corresponding to each link of multiple links of the STA. The second message frame may be similar to the description of FIG. 4 and the repetitive description is omitted herein for brevity. The communication module 720 may be configured to send the determined second message frame, for example, to the AP.

In addition, the communication module 720 may be configured to receive a first message frame from the AP. According to the embodiments, the first message frame may include a first ML element for indicating ML configuration information of the AP. The first ML element may include a MAC address ID corresponding to each link of multiple links of the AP and/or an MLD MAC address ID for indicating a MAC address of the AP. When the communication module 720 receives the first message frame from the AP, the processing module 710 may obtain the MLD MAC address ID of the AP and/or the MAC address ID corresponding to each link of multiple links of the AP by parsing the first message frame.

The communication apparatus 700 illustrated in FIG. 7 may perform the communication method described with reference to FIG. 4 and the repetitive description is omitted herein for brevity. The communication apparatus 700 illustrated in FIG. 7 is only exemplary and is not limited in the embodiments of the disclosure. For example, the communication apparatus 700 may also include other modules, e.g., memory modules, etc. The individual module in the communication apparatus 700 may be combined into more complex modules or may be divided into more separate modules.

The communication method and the communication apparatus described with reference to FIGS. 2 to 7 may enable the MLD to communicate on multiple links, thereby improving the throughput. In addition, the RA/TA interaction may be performed during the ML establishment, thereby saving the signaling.

Based on the same principles as the method provided in embodiments of the disclosure, the embodiments of the disclosure also provide an electronic device including a processor and a memory. The machine readable instructions (which may also be referred to as "computer programs") are stored on the memory. The processor is configured to execute the machine readable instructions to perform the method described with reference to FIGS. 2 and 4.

The embodiments of the disclosure also provide a computer-readable storage medium having computer programs stored thereon. When the computer programs are executed by a processor, the method described with reference to FIGS. 2 and 4 is performed.

In some embodiments, the processor may be a logic box, a module or a circuit, for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA) or other programmable logic devices, a transistor logic device, a hardware component, or any combination thereof. The processor may also be a combination used to implement a computing function, for example, a combination consisting of one or more microprocessors, and a combination consisting of DSPs and microprocessors.

In some embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It should be understood that although steps in the flowchart of the accompanying drawings are illustrated sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been illustrated and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A method for communication on multiple links, applicable to an access point, comprising:
determining a first message frame, wherein the first message frame comprises a first multi-link element for indicating multi-link configuration information of the access point; and
sending the first message frame.

2. The method of claim 1, wherein the first multi-link element comprises a media access control (MAC) address ID corresponding to each link of multiple links of the access point.

3. The method of claim 1 or 2, wherein the first multi-link element comprises a multi-link device MAC address ID for indicating a MAC address of the access point.

4. The method of any one of claims 1-3, wherein the first multi-link element comprises a link number ID for indicating a number of multiple links of the access point.

5. The method of any one of claims 1-4, wherein the first multi-link element comprises a link ID corresponding to each link of multiple links of the access point.

6. The method of any one of claims 2-5, wherein the multi-link device MAC address ID and the MAC address ID are included in separate sub-fields of the first multi-link element.

7. The method of any one of claims 1-6, wherein the first message frame further comprises a capability information ID for indicating that the access point is capable of supporting multi-link communication.

8. The method of any one of claims 1-7, further comprising: receiving a second message frame from a station, wherein
the second message frame comprises a second multi-link element for indicating multi-link configuration information of the station.

9. A method for communication on multiple links, applicable to a station, comprising:
determining a second message frame, wherein the second message frame comprises a second multi-link element for indicating multi-link configuration information of the station; and
sending the second message frame.

10. The method of claim 9, wherein the second multi-link element comprises a multi-link device MAC address ID for indicating a MAC address of the station and/or a MAC address ID corresponding to each link of multiple links of the station.

11. The method of claim 10, further comprising:
in response to the station being in an enhanced single radio multi-link mode, setting the second multi-link element as comprising the multi-link device MAC address ID.

12. The method of any one of claims 9-11, wherein the second multi-link element comprises a link number ID for indicating a number of multiple links of the station.

13. The method of any one of claims 9-12, wherein the second multi-link element comprises a link ID corresponding to each link of multiple links of the station.

14. The method of any one of claims 10-13, wherein the multi-link device MAC address ID and the MAC address ID are included in separate sub-fields of the second multi-link element.

15. The method of any one of claims 9-14, wherein the second message frame further comprises: a capability information ID for indicating that the station is capable of supporting multi-link communication.

16. The method of any one of claims 9-15, further comprising: receiving a first message frame from an access point, wherein
the first message frame comprises a first multi-link element for indicating multi-link configuration information of the access point.

17. A method for communication on multiple links, comprising:
sending a message frame, wherein the message frame comprises a multi-link element for indicating multi-link configuration information.

18. An apparatus for communication on multiple links, applicable to an access point, comprising:
a processing module, configured to determine a first message frame, wherein the first message frame comprises a first multi-link element for indicating multi-link configuration information of the access point; and
a communication module, configured to send the first message frame.

19. The apparatus of claim 18, wherein the communication module is further configured to receive a second message frame from a station, wherein
the second message frame comprises a second multi-link element for indicating multi-link configuration information of the station.

20. An apparatus for communication on multiple links, applicable to a station, comprising:
a processing module, configured to determine a second message frame, wherein the second message frame comprises a second multi-link element for indicating multi-link configuration information of the station; and
a communication module, configured to send the second message frame.

21. The apparatus of claim 20, wherein the communication module is further configured to receive a first message frame from an access point, wherein
the first message frame comprises a first multi-link element for indicating multi-link configuration information of the access point.

22. An electronic device comprising a memory, a processor and computer programs stored on the memory and runnable on the processor, wherein when the computer programs are executed by the processor, the method of any one of claims 1-8, 9-16 or 17 is performed.

23. A computer readable storage medium having computer programs stored thereon, wherein when the computer programs are executed by a processor, the method of any one of claims 1-8, 9-16 or 17 is performed.
